# EUROPÄISCHE PATENTSCHRIFT

(11) **EP 2 702 114 B1**
(45) Veröffentlichungstag und Bekanntmachung des Hinweises auf die Patenterteilung: **10.06.2015**
(21) Anmeldenummer: 12719325.8
(22) Anmeldetag: 26.04.2012
(51) Int. Cl.: C09K 3/18

(54) **MIKROKAPSELSYSTEM, STOFFGEMISCH UND VERFAHREN ZUR HERSTELLUNG EINER INSBESONDERE VEREISUNGSHEMMENDEN SCHICHT**
MICROCAPSULE SYSTEM, SUBSTANCE MIXTURE, AND METHOD FOR PRODUCING AN IN PARTICULAR ANTI-ICING LAYER
SYSTÈME DE MICROCAPSULES, MÉLANGE DE SUBSTANCES ET PROCÉDÉ DE FABRICATION D'UNE COUCHE RETARDANT EN PARTICULIER LA FORMATION DE GIVRE

(30) Priorität: 26.04.2011 DE 102011018717; 26.04.2011 DE 102011018716
(43) Veröffentlichungstag der Anmeldung: 05.03.2014
(73) Patentinhaber: Fraunhofer Gesellschaft zur Förderung der angewandten Forschung e.V., 80686 München (DE)
(72) Erfinder: LE, Nguyen-Truong, 71334 Waiblingen (DE)
(74) Vertreter: Mammel und Maser
(86) Internationale Anmeldenummer: PCT/EP2012/057607
(87) Internationale Veröffentlichungsnummer: WO 2012/146637

(56) Entgegenhaltungen:
- EP-A1- 2 248 607
- FR-A1- 2 941 918
- US-A- 3 429 827
- US-A- 4 532 123
- US-A- 4 891 172
- US-A- 5 516 621

## Beschreibung

Die Erfindung betrifft ein Mikrokapselsystem, bestehend aus einer äußeren Kapsel, welche mit einer äußeren Hülle ein Volumen mit mindestens einem Wirkstoff umschließt und aus zumindest einer inneren Kapsel, weiche von der äußeren Kapsel vollständig umgeben ist, wobei die innere Kapsel eine Hülle aufweist, die ein Volumen mit einem Steuerstoff umschließt. Die Erfindung betrifft des Weiteren ein Stoffgemisch, welches ein solches Mikrokapselsystem enthält sowie ein Verfahren zur Herstellung einer insbesondere vereisungshemmenden Schicht aus einem solchen Mikrokapselsystem.

Aus der DE 199 52 586 A1 ist bereits ein Mikrokapselsystem bekannt, welches zur umweltinduzierten Abgabe von Wirkstoffen vorgesehen ist. Dieses Kapselsystem besteht aus einer äußeren Kapsel, welche mit einer äußeren Hülle ein Volumen mit mindestens einem Wirkstoff umschließt. Innerhalb der äußeren Hülle sind mehrere innere Kapseln vorgesehen, welche einen weiteren Wirkstoff aufnehmen. Durch eine solche Anordnung von inneren Kapseln in mindestens einer äußeren Kapsel ist es möglich, ein sequentiell - also in zeitlichen Stufen -erfolgendes Freigeben zu erreichen. Dabei ist vorgesehen, dass die äußere Kapselwand unter dem über einen gewissen Zeitraum andauernden Einfluss einer Temperatur in Höhe der menschlichen Körpertemperatur aufplatzt, wohingegen das Material der Kapselwand der inneren Kapsel 14 ein Material umfasst, welches sich unter der länger andauernden Einwirkung von menschlichem Schweiß zersetzt und so die inneren Kapseln ebenfalls aufplatzen. Dadurch wird das sequentielle Freigeben von einem ersten und zweiten Wirkstoff erzielt.

Aus der DE 101 04 841 A1 ist des Weiteren ein Kapsel-in-Kapsel-System bekannt. In einer äußeren Kapsel ist ein erstes Medium als Trägermedium vorgesehen, in dem sich die inneren Kapseln befinden. In den inneren Kapseln ist ein zweites Medium vorgesehen, welches einen Aktivstoff oder Wirkstoff umfasst. Auch bei diesem Kapsel-in-Kapsel-System ist vorgesehen, dass sich sowohl die äußere als auch die innere Kapsel in unterschiedlichen Zeitpunkten auflösen beziehungsweise aufplatzen, so dass das Trägermedium in dem Aktivstoff oder Wirkstoff freigegeben wird.

Aus der US 3,429,827 A ist ein Mikrokapselsystem bekannt, welches eine äußere Kapsel mit einer äußeren Hülle umfasst, welche zumindest eine innere Kapsel mit einer inneren Hülle umgibt. In der inneren Hülle ist eine erste Fluidphase und in der äußeren Hülle eine zweite Fluidphase enthalten. Die Phase der inneren Hülle kann sich mit der Phase der äußeren Hülle vermischen. Ein Austreten der flüssigen Phasen aus der Außenhülle ist nur beim Zerbersten der äußeren Hülle gegeben.

Ein analoges Mikrokapselsystem ist aus der US 4,891,172 A, der US 5,516,621 A und der US 4,532,123 A bekannt.

Diese Mikrokapselsysteme weisen den Nachteil auf, dass aufgrund des Zerplatzens der äußeren und inneren Kapseln keine dosierte Abgabe eines Wirkstoffes an einer Umgebung möglich ist. Vielmehr wird das jeweilige Volumen in den äußeren Kapseln als auch den inneren Kapseln durch das Zerplatzen zwar sequentiell - also zeitversetzt - aber in der vollen Gesamtheit abgegeben. Dies ist jedoch für Anwendungen, wie beispielsweise bei einem Frostschutz, nicht gewünscht, so dass bei immer wieder absinkenden Temperaturen ein Frostschutz durch eine entsprechend dosierte Ausgabe eines Wirkstoffs aufgebaut werden kann.

Der Erfindung liegt die Aufgabe zugrunde, ein Mikrokapselsystem beinhaltend ein Gefrierschutzmittel als Werkstoff bereitzustellen, welches ermöglicht, dass bei Unterschreiten einer vorbestimmten Umgebungstemperatur der Wirkstoff freigegeben wird. Der Erfindung liegt des Weiteren die Aufgabe zugrunde, ein Stoffgemisch vorzuschlagen, welches als Frostschutz einsetzbar ist, sowie ein Verfahren zur Herstellung einer vereisungshemmenden Schicht mit den vorgenannten Eigenschaften zu ermöglichen.

Die erste Aufgabe wird durch ein Mikrokapselsystem gelöst, bei dem eine äußere Kapsel mit einer äußeren Hülle ein Volumen mit mindestens einem Wirkstoff umschließt und eine innere Kapsel vollständig von der äußeren Kapsel umgeben ist, wobei die innere Kapsel eine Hülle aufweist, die ein Volumen umschließt, wobei die äußere Hülle der äußeren Kapsel Poren aufweist und das Volumen in der inneren Kapsel ein Steuerstoff ist, das ein Gemisch aus Wasser und Gefrierpunkterniedrigungsmittel enthält, dessen Volumen mit zunehmend fallender Umgebungstemperatur ansteigt und ein Freisetzen zumindest eines Teils des Wirkstoffs, der ein Gefrierschutzmittel ist, aus der äußeren Hülle der äußeren Kapsel ansteuert. Dieses Mikrokapselsystem ermöglicht eine kontrollierte und dosierte Freisetzung des Wirkstoffs aus der äußeren Kapsel des Mikrokapselsystems in Abhängigkeit der herrschenden Umgebungstemperaturen. Dadurch kann ein Freisetzungsverhalten des Wirkstoffs in Abhängigkeit der Umweltbedingungen gegeben sein. Diese kontrollierte Freisetzung des Wirkstoffs aus der äußeren Hülle der äußeren Kapsel erfolgt durch die zumindest eine innere Kapsel beziehungsweise dem Volumen des Steuerstoffes in der inneren Kapsel, welches beim Absinken der Temperatur zunimmt und somit einen Druck auf das Volumen des Wirkstoffs in der äußeren Kapsel erhöht und die Freisetzung des Wirkstoffs bewirkt.

Insbesondere kann ein Anti-Freeze-Effekt erzielt werden. Beispielsweise können Oberflächen vor Vereisungen geschützt werden. Insbesondere kann dies bei Oberflächen von Flugzeugflügeln, Windrädern oder dergleichen vorgesehen sein.

Die Hülle der inneren Kapsel ist bevorzugt von dem Wirkstoff und/oder Steuerstoff nicht chemisch angreifbar. Dadurch wird eine langlebig dosierte Ausgabe des Wirkstoffs aus der äußeren Hülle der äußeren Kapsel sichergestellt.

Die Hülle der inneren Kapsel kann des Weiteren für den Wirkstoff und/oder den Steuerstoff undurchlässig sein. Dadurch wird wiederum gewährleistet, dass die dosierte Ausgabe über den Steuerstoff lang anhaltend aufrecht erhalten bleibt.

Die innere Hülle der inneren Kapsel ist bevorzugt dehnungsfähig und reißfest. Dadurch wird sichergestellt, dass keine Mischung des Steuerstoffs mit dem Wirkstoff durch Aufplatzen der Hülle der inneren Kapsel erfolgt und darüber hinaus eine Volumenänderung der inneren Kapsel möglich ist, um einen entsprechenden Steuerdruck zur dosierten Ausgabe des Wirkstoffes zu erzielen.

Eine Dehnfähigkeit der äußeren Hülle der äußeren Kapsel kann geringer als eine Dehnfähigkeit der inneren Hülle der inneren Kapsel ausgebildet sein. Dadurch wird bei einer fallenden Umgebungstemperatur eine Volumenzunahme des Steuerstoffs und in der inneren Kapsel ein Druckaufbau im Volumen der äußeren Kapsel ermöglicht.

Eine alternative Ausgestaltung der Erfindung sieht vor, dass die äußere Hülle der äußeren Kapsel bei einer Volumenvergrößerung der zumindest einen inneren Kapsel zerbricht. Dadurch kann ein schlagartiges Freisetzen des Volumens des Wirkstoffs ermöglicht sein, wobei die innere Kapsel geschlossen bleibt.

Bevorzugt weist die äußere Hülle der Kapsel Poren auf, deren Durchmesser bei Erhöhung des Druckes des Volumens - also des Wirkstoffs - in der äußeren Hülle der äußeren Kapsel vergrößert wird. Dadurch kann bei einer starken Volumenzunahme der inneren Kapsel ein verstärktes Freisetzen des Wirkstoffs angesteuert werden.

Als Gefrierpunkterniedrigungsmittel kann bevorzugt ein Salz, ein Alkohol, ein Glykol und/oder Spiritus vorgesehen sein. Die Auswahl des Stoffes als auch deren Mischungsverhältnis bestimmt den jeweiligen Gefrierpunkt. Gleichzeitig kann dadurch auch die Volumenzunahme der inneren Kapsel und somit die Drucküberhöhung im Volumen der äußeren Hülle der äußeren Kapsel bestimmt werden.

Bei dem Mikrokapselsystem ist bevorzugt vorgesehen, dass der Wirkstoff in der äußeren Hülle ein Gefrierschutzmittel aus einer oder mehreren der Stoffgruppen der Glyceride, Glykole, Ethanole, Frostschutzproteine, eisstrukturierenden Proteine ist. Die Proteine können natürlich oder synthetisch sein. Bevorzugt können Gefrierschutzmittel eingesetzt werden, die biologisch abbaubar sind. Alternativ kann als Wirkstoff auch eine Ölphase vorgesehen sein.

Das Mikrokapselsystem ist bevorzugt derart ausgestaltet, dass die äußere Kapsel den Wirkstoff in eine Umgebung nicht freisetzt, solange eine Umgebungstemperatur höher als eine Schwellentemperatur des Steuerstoffs ist und der Wirkstoff in die Umgebung aus der äußeren Kapsel freigesetzt wird, wenn die Umgebungstemperatur die Schwellentemperatur des Steuerstoffs unterschritten hat. Dadurch kann in Abhängigkeit der tatsächlichen Umgebungsbedingungen eine Ausgabe des Wirkstoffes erfolgen und somit insbesondere ein Gefrierschutz erzielt werden. Beispielsweise kann die Schwellentemperatur 4 °C sein, sofern der Steuerstoff aus Wasser besteht. Dieser kann beispielsweise auch -5 °C oder - 10°C umfassen, sofern der Steuerstoff eine Mischung aus Wasser und einem Gefrierpunkterniedrigungsmittel ist. Alternativ kann auch vorgesehen sein, dass in einer äußeren Kapsel mehrere innere Kapseln mit voneinander abweichenden Steuerstoffen sind, die voneinander verschiedene Schwellentemperaturen aufweisen. Dies kann dazu führen, dass bei zunehmendem Frost eine verstärkte Ausgabe des Wirkstoffes erfolgt, da nach und nach bei mehreren inneren Kapseln eine Unterschreitung der Schwellentemperatur und somit eine Volumenzunahme gegeben ist. Dadurch kann in Abhängigkeit der zunehmenden Temperaturerniedrigung eine Vergrößerung der Wirkstoffausgabe ermöglicht werden.

Die der Erfindung zugrunde liegende Aufgabe wird des Weiteren durch ein Stoffgemisch gelöst, welches ein erfindungsgemäßes Mikrokapselsystem umfasst. Das Stoffgemisch umfasst mindestens ein Bindemittel, in dem das Mikrokapselsystem - also eine Vielzahl von äußeren Kapseln mit darin eingelagerten inneren Kapseln - eingebunden ist. Das Stoffgemisch kann zum Aufbau einer Frostschutzschicht verwendet werden. Sofern die Frostschutzschicht beispielsweise auf einem Rotorblatt einer Windkraftanlage aufgebracht ist und sich die Windkraftanlage im Betrieb befindet, kann eine Fliehkraft ausreichen, um eine Eisschicht zu entfernen oder gar nicht erst entstehen zu lassen.

Bevorzugt enthält das Bindemittel des Stoffgemisches hydrophobe Stoffe. Durch die Kombination von Gefrierschutzmitteln mit hydrophoben Bindern, insbesondere auf Silikonbasis, können Eisschichten auf den Rotorblättern von Windkraftanlagen besonders effektiv gelöst werden.

Das Stoffgemisch kann eine Auswahl von einem oder mehreren Stoffen aus folgenden Stoffarten umfassen: Anorganische Pigmente, organische Pigmente, wasserlösliche Farbstoffe, nicht-wasserlösliche Farbstoffe, Füllstoffe, Lösungsmittel, Weichmacher, Katalysatoren, Inhibitoren, Haftmittel, Lackadditive, Dispergierhilfsmittel und/oder Formulierhilfsmittel.

Die der Erfindung zugrunde liegende Aufgabe wird des Weiteren durch ein Verfahren zur Herstellung, insbesondere einer vereisungshemmenden Schicht, gelöst, bei der auf einen zu schützenden Gegenstand ein Stoffgemisch bestehend aus zumindest einem Bindemittel und einem Mikrokapselsystem aufgebracht wird. Das Stoffgemisch kann dabei in fließfähiger Form ausgebildet sein, welches aufgetragen, aufgesprüht oder auflaminiert wird. Insbesondere kann das Stoffgemisch als Lack vorgesehen sein. Alternativ kann das Stoffgemisch in Form einer Folie vorliegen, welche aufgelegt, aufgeklebt, auflaminiert oder aufkaschiert wird.

Zur Herstellung einer insbesondere vereisungshemmenden Schicht kann des Weiteren vorgesehen sein, dass diese vereisungshemmende Schicht mechanisch, physikalisch oder chemisch strukturiert, insbesondere laserstrukturiert, wird, um eine wasserabweisende Eigenschaft der vereisungshemmenden Schicht zu verbessern. Dadurch kann eine Mikrostruktur eingebracht werden, wodurch die Abplatzeffekte bei einer gegebenenfalls sich bildenden Vereisung zusätzlich erhöht werden.

Die Erfindung sowie weitere vorteilhafte Ausführungsformen und Weiterbildungen derselben werden im Folgenden anhand der in den Zeichnengen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: einen schematischen Querschnitt durch eine erfindungsgemäße Kapsel,
- Figur 2: ein schematisches Phasendiagramm eines Ethylenglykol-Wasser-Gemischs,
- Figur 3: ein schematisches Diagramm der Dichte von Wasser über der Temperatur,
- Figur 4: schematisch den Verlauf einer Freisetzungsintensität eines Gefrierschutzmittels aus dem erfindungsgemäßen Mikrokapselsystem in Abhängigkeit einer Umgebungstemperatur,
- Figur 5: schematisch einen Querschnitt einer Rotorblattspitze einer Windenergieanlage,
- Figur 6: schematisch ein Ablaufdiagramm eines Verfahrens zur Herstellung einer vereisungshemmenden Schicht (Frostschutzschicht) und
- Figur 7: schematisch ein Ablaufdiagramm eines weiteren Verfahrens zur Herstellung einer vereisungshemmenden Schicht.

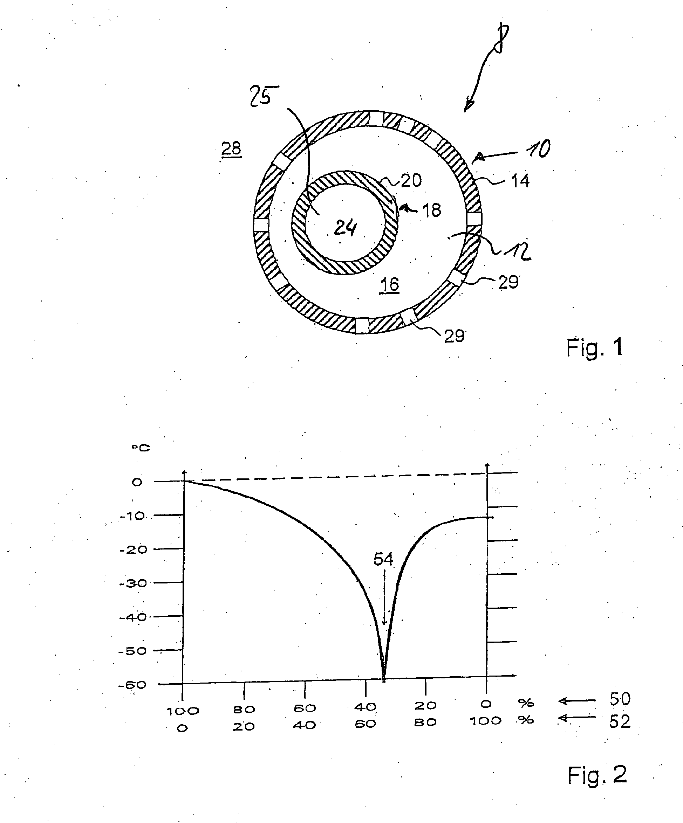

Figur 1 zeigt ein Mikrokapselsystem 8 mit einer äußeren Kapsel 10, in der ein Wirkstoff 12 angeordnet ist. Der Wirkstoff 12 kann ein Gefrierschutzmittel (Frostschutzmittel) sein. Die äußere Kapsel 10 weist eine äußere Hülle 14 auf. Ein mittlerer Durchmesser der Kapseln kann beispielsweise zwischen 0,1 µm und 200 µm, vorzugsweise zwischen 0,2 µm und 20 µm, betragen. Die äußere Hülle 14 kann aus einer oder mehreren Arten von Polymeren bestehen. Geeignete Polymere können Polyester, Polyamide, Melaminharze, Polyurethane, Polyharnstoffe, Polysiloxane, Polymethacrylate sowie Copolymerisate aus (Meth)acrylsäure und (Meth)acrylsäureester sein. Die Polymere können natürlich oder synthetisch sein. In vielen Fällen kann es vorteilhaft sein, vernetzte Polymere anzuwenden. Als natürliches Polyamid kann Gelatine besonders gut geeignet sein.

Die äußere Hülle 14 umschließt ein Volumen 16 des Wirkstoffs 12. Der Wirkstoff 12 kann eine Auswahl eines Stoffes oder mehrerer Stoffe aus folgenden Stoffgruppen umfassen: Glycerine, Glykole, Ethanole, Frostschutzproteine, eisstrukturierende Proteine. Der Wirkstoff 12 kann einen synthetischen Stoff und/oder einen Stoff umfassen, der in der Natur vorkommt. Der Wirkstoff kann auch ein Düngemittel, biologische Keime, wie Samen, Pilze, Bakterien oder andere Einzeller oder Viren sein. Dabei ergeben sich andere und weitere Anwendungsbereiche.

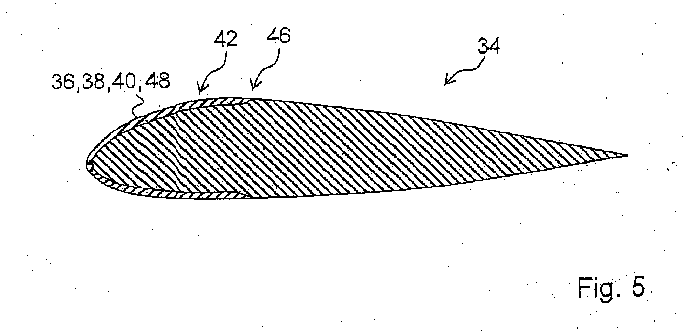

Eine bekannte Wirkung von Gefrierschutzmitteln wie Glykol ist eine Herabsetzung des Gefrierpunkts (Schmelzpunkts). Figur 2 zeigt ein Phasendiagramm einer Wasser-Glykol-Mischung. Reines Ethylenglykol hat einen um etwa 16 °C niedrigeren Gefrierpunkt als Wasser. Der niedrigste Schmelzpunkt einer Wasser-Glykol-Mischung liegt am eutektischen Punkt 54 bei einem ca. 65 %-igen Glykolanteil und einer Gefriertemperatur von - 60 °C**.** Bei einem Glykolanteil unterhalb von 65 % liegen Eiskristalle in flüssiger Lösung vor. Bei einem Glykolanteil oberhalb von 65 % liegen Glykolkristalle in flüssiger Lösung vor. Aus dem Phasendiagramm folgt, dass Anwesenheit von Glykol in jedem Fall die Gefriertemperatur erniedrigt. Wenn sich Glykol auf der Oberfläche 40 einer technischen Einrichtung 34 befindet (siehe Figur 5), bleibt es also auch in einem Temperaturbereich unterhalb des Gefrierpunkts von reinem Wasser auf der Oberfläche 40 der technischen Einrichtung 34 flüssig. Es kann sich auf der Oberfläche 40 der technischen Einrichtung ein Flüssigkeitsfilm ausbilden. Dies kann ein Anhaften von Schnee- und Eiskristallen an der Oberfläche 40 der technischen Einrichtung 34 hemmen oder rückgängig machen.

Innerhalb der äußeren Hülle 14 der äußeren Kapsel 10 können eine oder mehrere innere Kapseln 18 angeordnet sein. Die Hülle 20 kann aus einer oder mehreren Arten von Polymeren bestehen, die zuvor für die äußere Hülle 14 genannt wurden. Innerhalb eines Volumens 24, der von der Hülle 20 der inneren Kapsel 18 umgeben ist, ist ein Steuerstoff 25 angeordnet. Der Steuerstoff 25 hat die Funktion, eine Freisetzung des Wirkstoffs 12 in eine Umgebung 28 der äußeren Kapsel 10 direkt oder mittelbar zu beeinflussen.

Der Steuerstoff 25 kann ein Stoffgemisch sein. Der Steuerstoff 25 kann die Eigenschaft haben, dass er sich bei einem Übergang von einer flüssigen Phase in eine feste Phase ausdehnt oder bei fallenden Temperaturen ausdehnt. Der Steuerstoff 25 kann Wasser oder eine Mischung aus Wasser und einem Gefrierschutzmittel beziehungsweise einem Gefrierpunkterniedrigungsmittel umfassen.

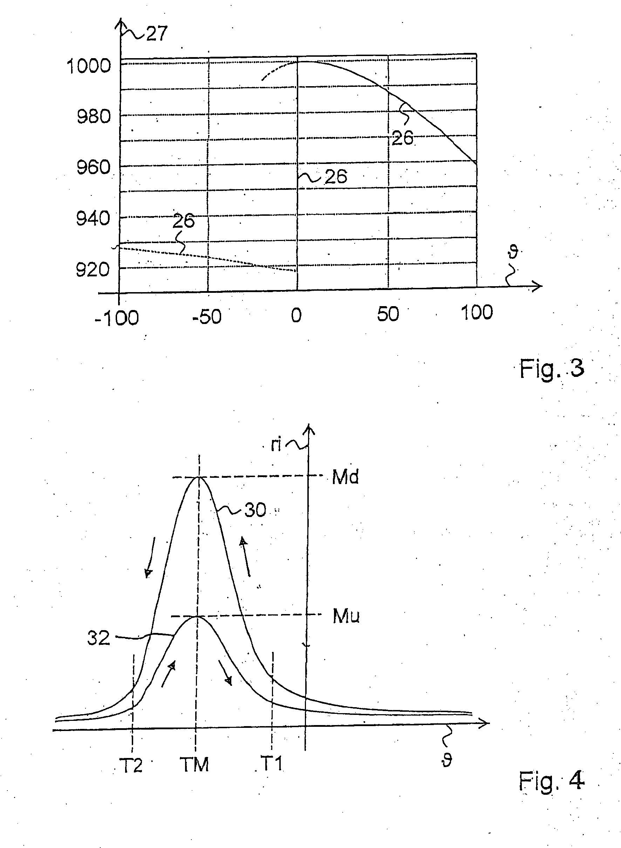

Figur 3 zeigt einen Verlauf 26 der Dichte 27 von reinem Wasser in der Einheit kg/m³ über der Temperatur ϑ in °C. Beim Einfrieren an der 0 °C-Grenze nimmt die Dichte 27 von reinem Wasser um ca. 8 % ab. Folglich dehnt sich reines Wasser bei diesem Phasenübergang um ca. 8 % aus.

Durch Zugabe von gefrierpunktsenkenden Stoffen, beispielsweise durch Zugabe eines Alkohols und/oder eines Salzes, kann der Gefrierpunkt abgesenkt werden. Eine Volumenzunahme bei Annäherung an den Gefrierpunkt von Wasser kann mittels einer oder mehrerer der folgenden Maßnahmen beeinflusst werden:
a) Zugabe von Salzen oder anderen Stoffen zur Verschiebung des Gefrierpunkts des Wirkstoffs 12 und/oder des Steuerstoffs 25;
b) Zugabe von Füllstoffen zur Beeinflussung eines Temperaturkoeffizienten des Wirkstoffs 12 und/oder des Steuerstoffs 25;
c) Wahl des Materials der äußeren Hülle 14 und/oder der Hülle 20 der inneren Kapsel 18 zur Bestimmung eines Elastizitätsmoduls des Materials der äußeren Hülle 14 beziehungsweise der Hülle 20 der inneren Kapsel 18.

Die Variante a kann den Vorteil haben, dass eine Schwellentemperatur T1, ab der der vereisungsvermeidende Stoff 12 abgegeben wird, auf einen gewünschten Wert verschoben wird. Beispielsweise weist Wasser aufgrund seiner Anomalie bei 4 °C und Normaldruck die größte Dichte auf und fängt unterhalb dieser Schwellentemperatur T1 an, sich wieder auszudehnen. Eine deutliche Ausdehnung findet allerdings erst während des Phasenübergangs beim Einfrieren zu Eis statt. Durch eine Zugabe kann die Einfriertemperatur des Wirkstoffs 12 und/oder des Steuerstoffs 25 nach unten verschoben werden. Als Zugabe kann hierfür beispielsweise ein handelsübliches Salz, ein Alkohol, ein Glykol oder Spiritus verwendet werden.

Bei der Variante b kann die dem Wasser beigefügte Komponente den thermischen Ausdehnungskoeffizienten des Steuerstoffs 25 beeinflussen. Beispielsweise kann eine andere Flüssigkeit als Wasser, beispielsweise Kohlensäure, oder ein Feststoff einen thermischen Ausdehnungskoeffizienten Wirkstoffs 12 und/oder des Steuerstoffs 25 verringern. Durch eine Änderung des thermischen Ausdehnungskoeffizienten kann eine verringerte Abgabe eines vereisungsvermeidenden Wirkstoffes 12 pro Grad Temperaturdifferenz erreicht werden. Als Feststoffe können beispielsweise Polymerkügelchen verwendet werden, die den thermischen Ausdehnungskoeffizienten des Steuerstoffs 25 verringern.

Reines Wasser hat eine niedrige Kompressibilität von etwa 2 GPa. Die Kompressibilität von Wasser kann durch Beigaben zum Wasser verändert werden. Durch die Variante b kann auch eine Kompressibilität des Wirkstoffs 12 und/oder des Steuerstoffs 25 und damit auch ein Druck in der äußeren Kapsel 18 beziehungsweise in der inneren Kapsel 18 mittels Beigaben eingestellt werden.

Durch die Variante c kann auch ein Elastizitätsmodul der jeweiligen Hülle 14, 20 und damit auch ein Druck in der jeweiligen Kapsel 10, 18 mittels Beigaben eingestellt werden. Der Kapselinnendruck kann je nach Wahl des Kunststoffes (aufgrund unterschiedlicher Elastizität und unterschiedlicher thermischer Ausdehnungskoeffizienten der Kunststoffe) eingestellt oder verändert werden. Für das Wandmaferiai der äußeren Kapseln 10 kommen für Kapseln bekannte Materialien, insbesondere Polymere, in Frage. Geeignete Polymere sind beispielsweise Polymere von Harnstoff oder von Derivaten von Harnstoff und Formaldehyd, oder Polymere aus Melamin-Formaldehyd, die porös ausgebildet werden können.

Wenn die Hülle 20 der inneren Kapsel 18 eine relativ größere Dehnbarkeit aufweist als die äußere Hülle 14, kann sich die Hülle 14 der äußeren Kapsel 10 beim Wärmeentzug am Schmelzpunkt nicht auf Dauer an die Ausdehnung des Steuerstoffs 25 anpassen. Unter 'relativ größerer Dehnbarkeit' der Hülle 20 der inneren Kapsel 18 wird hier verstanden, dass bei Erhöhung eines Drucks innerhalb des Volumens 24 der inneren Kapsel 18 die äußere Hülle 14 dem dadurch auf sie ausgeübten Innendruck zuerst nicht standhält und zerbirst. Die Kompressibilität von Flüssigkeiten ist verhältnismäßig gering. Zur Orientierung sei erwähnt, dass reines Wasser ein Kompressionsmodul von circa 2 GPa aufweist. Innerhalb der äußeren Kapsel 10 kann sich mit Wärmeentzug am Schmelzpunkt ein hoher Druck aufbauen, der ihre Hülle 14 letztlich zum Zerbersten bringen kann. Damit kann der Wirkstoff 12 in eine Umgebung 28 der äußeren Hülle 14 entlassen werden. Mittels einer gezielten Streuung der Wanddicke oder einer sonstigen chemischen, physikalischen oder geometrischen Beschaffenheit der äußeren Hüllen 14 kann der Zeitpunkt des Entlassens des Wirkstoffes 12 über einen Zeitraum von beispielsweise mehreren Stunden, Tagen oder sogar Monaten verteilt werden.

Bevorzugt ist vorgesehen, dass die Hülle 20 der inneren Kapsel 18 dehnfähig, jedoch sehr reißfest ist und bei einem Anstieg des inneren Druckes nicht zerbirst. Vielmehr wird aufgrund des Anstiegs des Volumens 24 in der inneren Kapsel beim Wärmeentzug am Schmelzpunkt über die Volumenzunahme ein Druck auf das Volumen 16 des Wirkstoffs 12 aufgebaut, so dass über eine diffusionsfähige äußere Hülle 14 eine dosierte Abgabe des Wirkstoffes 12 in die Umgebung 28 gegeben ist. Das Maß der Ausdehnung des Steuerstoffes 24 kann die Diffusionsgeschwindigkeit des Wirkstoffs 12 durch die äußere Hülle 14 in die Umgebung 28 der äußeren Kapsel 10 bestimmen. Bevorzugt kann die äußere Hülle 14 der äußeren Kapsel 10 Poren 29 aufweisen. Mittels einer gezielten Einstellung der Wanddicke, eines Porendurchmessers und/oder einer sonstigen chemischen, physikalischen oder geometrischen Beschaffenheit der äußeren Hüllen 14 kann der Diffusionsvorgang über einen Zeitraum von beispielsweise mehreren Stunden, Tagen oder sogar Monaten verteilt werden. Darüber hinaus kann aufgrund des Steuerstoffes 24 in der inneren Kapsel 18 auch in Abhängigkeit der tatsächlichen Umgebungstemperatur eine dosierte Ausgabe des Wirkstoffs 12 erfolgen, das heißt, solange beispielsweise Frosttemperaturen herrschen, wird eine Ausgabe des Wirkstoffes 12 bewirkt. Sobald sich die Temperatur oberhalb eines Gefrierpunktes des Steuerstoffes 24 erhöht, wird die Ausgabe des Wirkstoffs 12 gestoppt.

Figur 4 zeigt schematisch ein Beispiel für einen mittleren Verlauf einer Freisetzungsintensität ri des Wirkstoffes 12 aus der äußeren Kapsel 10 in Abhängigkeit einer Temperatur ϑ der äußeren Kapsel 10. Oberhalb einer ersten Schwellentemperatur T1 kann die Freisetzungsintensität ri niedrig sein. Mit abnehmender Temperatur ϑ kann die Freisetzungsintensität ri unterhalb der ersten Schwellentemperatur T1 stark zunehmen.

Unterhalb der ersten Schwellentemperatur T1 kann folgender Sachverhalt vorliegen: Hier können sich die inneren Kapseln 18 aufgrund einer Dichteabnahme des Steuerstoffes 26 stärker ausdehnen. Die inneren Kapseln 18 können dann auf die äußere Hülle 14 der Kapseln 10 einen so hohen Druck ausüben, dass die äußeren Hüllen 14 der Kapseln 10 den Wirkstoff 12 in eine Umgebung 28 der äußeren Kapsel 10 freigeben. Bis zu der zweiten Schwellentemperatur T2, die niedriger ist als die erste Schwellentemperatur T1, können nahezu alle Kapseln 10 den Wirkstoff ausgeben. Dabei ist bevorzugt eine erste Gruppe von inneren Kapseln 18 eingesetzt, deren Steuerstoff 25 eine Schwellentemperatur T1 umfasst, und eine zweite Gruppe von inneren Kapsel 18 eingesetzt, deren Steuerstoff eine Schwellentemperatur T2 umfasst. Es kann sein, dass es unterhalb der zweiten Schwellentemperatur T2 kaum noch zu einer Freisetzung des Wirkstoffes 12 kommt, die Freisetzungsintensität ri also niedrig ist.

Alternativ oder zusätzlich kann ein Teil der Kapseln 10 auch aufplatzen, so dass der Wirkstoff 12 schneller ausgegeben wird.

Alternativ oder zusätzlich ist es auch möglich, dass das Aufplatzen der Kapseln 10 und/oder das Hindurchdiffundieren des Wirkstoffs 12 beim Unterschreiten der zweiten Schwellentemperatur T2 durch eine Verlangsamung physikalischer und/oder chemischer Prozesse wie Zersetzungsprozesse oder abnehmende Viskosität abnimmt oder zum Erliegen kommt.

Das Aufplatzen der Kapseln 10 und/oder Hindurchdiffundieren des Wirkstoffs 12 kann sich wieder verstärken, wenn die zweite Schwellentemperatur T2 wieder überschritten wird. Es kann dann sein, dass sich das Maximum Md der Freisetzungsintensität ri im absteigenden Ast 30 von einem Maximum Mu einer Freisetzungsintensität ri im aufsteigenden Ast 32 unterscheidet, so dass eine Hysterese vorliegt. Insbesondere kann das Maximum Mu der Freisetzungsintensität ri im aufsteigenden Ast 32 infolge eines teilweisen Verbrauchs des Wirkstoffes 12 und/oder von noch nicht aufgeplatzten Kapseln 10 niedriger sein als das Maximum Md der Freisetzungsintensität ri im absteigenden Ast 30.

Figur 5 zeigt schematisch das Beispiel eines Querschnitts einer Spitze eines Gegenstandes 34, insbesondere eines Rotorblatts einer Windenergieanlage. Auf dem Rotorblatt 34 kann ein Anstrich aufgetragen oder Lack 36 aufgesprüht sein, der ein Bindemittel umfasst, in das das Mikrokapselsystem 8 eingebettet ist.

Alternativ kann auf dem Rotorblatt 34 eine Folie 38 befestigt sein, welche das Mikrokapselsystem 8 enthält. Die Folie 38 kann mindestens eine Schicht 36 (Frostschutzschicht) aufweisen, in der sich eine Vielzahl von erfindungsgemäßen Mikrokapselsystemen 8 befindet. Die Schicht 36 kann auch ein Bindemittel umfassen, in das die Kapseln 10 des Mikrokapselsystems 8 eingebettet sind.

Der Anteil des Gefrierschutzmittels 12 an der Schicht 36 kann zwischen 1 und 50 Gewichtsprozenten, vorzugsweise zwischen 2 und 40 Gewichtsprozenten, betragen.

Als Bindemittel können filmbildende Bindemittel geeignet sein, die für Beschichtungen bekannt sind. Beispiele dafür sind: Polyester, Polyacrylate, Polyurethane, Polyamide, chlorierte Kautschuke, Polyvinylchlorid, Polysiloxane, atmungsaktive Silikonharze, Silikonkunststoffe. Gut geeignet können auch sogenannte 2-K-Systeme sein, bei denen das Bindemittel aus zwei Reaktivkomponenten in der Beschichtung erzeugt wird. Bevorzugte 2-K-Systeme können zum Beispiel Polyurethane aus einem Polyester- oder Polyetherdiol und einem Diisocyanat sein. Durch Einbau von Polysiloxaneinheiten in ein Polyetherdiol können Polyurethane mit Antihafteigenschaften erzeugt werden. Bindemittel, die überwiegend aus Polysiloxaneinheiten bestehen, können sowohl als kondensationsvernetzende 1K-Systeme als auch als additionsvernetzende 2K-Systeme verfügbar sein. Die Bindemittel können aus organischen Lösungsmitteln oder als wässrige Dispersion verarbeitet werden. Geeignete organische Lösungsmittel können aliphatische Kohlenwasserstoffe, insbesondere Benzinfraktionen, aromatische Kohlenwasserstoffe, Halogenkohlenwasserstoffe, Alkohole, Ketone, Ester und Ether sein.

Die vereisungshemmenden Stoffgemische als Beschichtungsmittel können neben dem mikroverkapselten Gefrierschutzmittel und neben den Bindemitteln eine oder mehrere der folgenden Hilfsmittel umfassen: Füllstoffe, Lösungsmittel, Weichmacher, Farbstoffe, Pigmente, Katalysatoren, Inhibitoren, Haftmittel, Lackadditive und/oder gängige Dispergier- bzw. Formulierhilfsmittel.

Vorzugsweise ist das Beschichtungsmittel beziehungsweise Bindemittel für den Wirkstoff 12 durchlässig, damit auch solcher Wirkstoff 12 an die Oberfläche 40 der Schicht 36 gelangen kann, der von der Kapsel 10 stammt, die in einer tieferen Lage der Schicht 36 eingebettet sind. Damit ist es dann auch möglich, auf einem Gegenstand 34 einen größeren Vorrat an Wirkstoff 12 anzuordnen, indem dort eine dickere Schicht 36 aufgebracht oder befestigt wird.

Aufgrund des beschriebenen Temperaturverhaltens des Mikrokapselsystems 8 kann die Folie 38 bei niedrigen Temperaturen, insbesondere T2 < ϑ < T1, den Wirkstoff 12 ausgeben. Der ausgegebene Wirkstoff 12 kann eine Eis- und/oder Reifbildung an oder auf dem Gegenstand 34 verhindem oder zumindest hemmen. Alternativ oder zusätzlich kann der ausgegebene Wirkstoff 12 Eis und/oder Reif, das sich an dem Gegenstand 34 angesammelt hat, an einer Grenzschicht zur Folie 38 oder Beschichtung lösen, so dass sich an dem Übergang zwischen Eis und der Folie 38 oder der Beschichtung beziehungsweise zwischen Reif und der Folie 38 ein Flüssigkeitsfilm bildet und das Eis beziehungsweise der Reif seinen Halt an der Folie 38 beziehungsweise der Beschichtung verliert und sich von der Folie 38 beziehungsweise der Beschichtung löst.

Das Material der äußeren Hülle 14 der äußeren Kapsel 10 kann eine Eigenschaft (beispielsweise Makro- oder Mikrostruktur oder chemische Beschaffenheit) aufweisen, die bewirkt, dass der Wirkstoff 12 an einer Außenfläche der äußeren Kapsel 10 anhaften kann. Dadurch kann der Wirkstoff 12 von dort aus wirken, ohne dabei großteils verbraucht zu werden.

Auf dem Rotorblatt 34, kann sich eine Ausnehmung 42 befinden. Die Ausnehmung 42 kann sich beispielsweise an einer Flanke 44 des Rotorblatts 34 befinden, an der im Normalbetrieb der Luftdruck am höchsten ist. In der Ausnehmung 42 kann die zuvor beschriebene Folie 38 befestigt sein. Die Ausnehmung 42 kann so ausgeformt sein, dass der Umriss des Querschnitts des Rotorblatts 34 im Bereich einer Stoßnaht 46 nach Befestigen der Folie 38 strömungstechnisch vorteilhaft ist. Nach Befestigen der Folie 38 kann der Umriss des Querschnitts des Rotorblatts 34 im Bereich einer Stoßnaht 46 einen Verlauf aufweisen, der für einen Wirkungsgrad der Windenergieanlage strömungstechnisch vorteilhaft ist. Insbesondere kann eine erste Ableitung, insbesondere eine erste und zweite Ableitung des Umrisses des Querschnitts des Rotorblatts 34 im Bereich der Stoßnaht 46 stetig sein. Infolge der Ausnehmung 42 kann für einen größeren Vorrat an Wirkstoff 12 auch eine dickere Folie 38 auf dem Rotorblatt 34 befestigt werden, ohne dass sich dadurch der Umriss des Querschnitts des Rotorblatts 34 strömungstechnisch verschlechtert.

Alternativ zu dem vorgenannten Gegenstand, insbesondere des Rotorblattes von Windkraftanlagen, können ebenso Flugzeugflächen, Turbinenschaufeln, Leistungsisolatoren, Solarpaneele oder weitere vor Vereisung schützende Gegenstände vorgesehen sein.

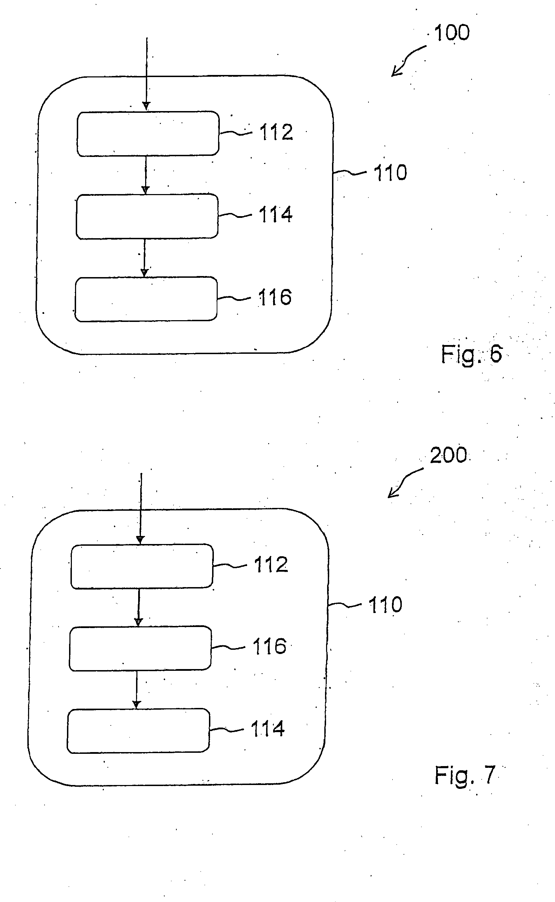

Figur 6 zeigt schematisch ein Ablaufdiagramm eines Verfahrens 100 zur Herstellung einer vereisungshemmenden Schicht 36. Das Verfahren 100 kann einen Schritt 112 umfassen, in dem eine Vielzahl der Mikrokapselsysteme 8 oder ein Stoffgemisch 48, in dem eine Vielzahl von Kapseln 10 eingebettet sind, in einer Folie 38 angeordnet werden. In einem nachfolgenden Schritt 114 kann eine Folie 38 auf den zu schützenden Gegenstand 34 aufgeklebt werden. Das Verfahren kann einen Schritt 116 umfassen, in welchem die vereisungshemmende Schicht 36 mechanisch, physikalisch oder chemisch strukturiert oder laserstrukturiert wird, um eine wasserabweisende Eigenschaft der vereisungshemmenden Schicht 36 zu verbessern. Mit einer Mikrostrukturierung kann ein wasserabweisender Effekt herbeigeführt werden, der eine Oberflächenspannung des Wassers nutzt, wie er vom Blatt der Lotuspflanze bekannt ist. Der wasserabweisende Effekt der Mikrostrukturierung kann ein Anhaften von Schmutz verringern. Damit kann eine Anzahl von Kristallisationskeimen auf der zu schützenden Oberfläche verringert werden, an denen Eis- oder Reifkristalle aufwachsen können. Der Schritt 116 kann (wie in Figur 6 dargestellt) nach dem Schritt 114 oder (wie in Figur 7 dargestellt) vor dem Schritt 114 durchgeführt werden.

## Patentansprüche

1. Mikrokapselsystem (8) bestehend
- aus einer äußeren Kapsel (10), welche mit einer äußeren Hülle (14) ein Volumen (16) mit mindestens einem Wirkstoff (12) umschließt, und
- aus zumindest einer inneren Kapsel (18), welche von der äußeren Kapsel (10) vollständig umgeben ist, wobei die innere Kapsel (18) eine Hülle (20) aufweist, die ein Volumen (24) umschließt, **dadurch gekennzeichnet,**
- **dass** die äußere Hülle (14) der äußeren Kapsel (10) Poren (29) aufweist,
- **dass** das Volumen (24) in der inneren Kapsel (18) ein Steuerstoff (25) ist, das ein Gemisch aus Wasser und Gefrierpunkterniedrigungsmittel enthält, dessen Volumen (24) mit zunehmend fallender Umgebungstemperatur ansteigt und ein Freisetzen zumindest eines Teils des Volumens (16) des Wirkstoffs (12), der ein Gefrierschutzmittel ist, aus der äußeren Hülle (14) der äußeren Kapsel (10) ansteuert.

2. Mikrokapselsystem nach Anspruch 1, **dadurch gekennzeichnet, dass** die Hülle (20) der inneren Kapsel (18) von dem Wirkstoff (12) und/oder dem Steuerstoff (25) nicht chemisch angreifbar ist.

3. Mikrokapselsystem nach Anspruch 1, **dadurch gekennzeichnet, dass** die Hülle (20) der inneren Kapsel (18) für den Wirkstoff (12) und/oder für den Steuerstoff (25) undurchlässig ist.

4. Mikrokapselsystem nach einem der vorhergehenden Ansprüche, **dadurch gekennzeichnet, dass** die Hülle (20) der inneren Kapsel (18) dehnungsfähig und reißfest ist.

5. Mikrokapselsystem nach einem der vorhergehenden Ansprüche, **dadurch gekennzeichnet, dass** die Dehnfähigkeit der äußeren Hülle (14) der äußeren Kapsel (10) geringer als eine Dehnfähigkeit der Hülle (20) der zumindest einen inneren Kapsel (18) bei fallender Umgebungstemperatur ist.

6. Mikrokapselsystem nach Anspruch 1, **dadurch gekennzeichnet, dass** die äußere Hülle (14) der äußeren Kapsel (10) aufgrund des steigenden Innendrucks der zumindest einen inneren Kapsel (18) zerbricht.

7. Mikrokapselsystem nach Anspruch 1, **dadurch gekennzeichnet, dass** der Durchmesser der Poren (29) der äußeren Hülle (14) der äußeren Kapsel (10) Poren (29) sich bei Erhöhung eines Druckes des Volumens (16) durch die zumindest eine innere Kapsel (18) vergrößert.

8. Mikrokapselsystem nach Anspruch 1, **dadurch gekennzeichnet, dass** das Gefrierpunkterniedrigungsmittel ein Salz, ein Alkohol, ein Glykol und/oder ein Spiritus ist.

9. Mikrokapselsystem nach einem der vorhergehenden Ansprüche, **dadurch gekennzeichnet, dass** der Wirkstoff (12) aus einer oder mehreren der Stoffgruppen Glycerine, Glykole, Ethanole, Frostschutzproteine, eisstrukturierenden Proteine ausgewählt ist oder dass der Wirkstoff (12) eine Ölphase ist.

10. Mikrokapselsystem nach einem der vorhergehenden Ansprüche, **dadurch gekennzeichnet, dass** die äußere Kapsel (10) den Wirkstoff (12) in eine Umgebung außerhalb der äußeren Hülle (14) nicht freisetzt, wenn eine Umgebungstemperatur höher als eine Schwellwerttemperatur (T1) des Steuerstoffes (25) ist und der Wirkstoff (12) in die Umgebung (28) aus der äußeren Hülle (14) mit der äußeren Kapsel (10) freigesetzt wird, wenn die Umgebungstemperatur die Schwellwerttemperatur (T1) des Steuerstoffs (25) unterschritten hat.

11. Stoffgemisch (48) umfassend mindestens ein Bindemittel (50), **dadurch gekennzeichnet, dass** das Stoffgemisch (48) eine Vielzahl eines Mikrokapselsystems (8) nach einem der Ansprüche 1 bis 10 umfasst.

12. Stoffgemisch nach Anspruch 11, **dadurch gekennzeichnet, dass** das Bindemittel (50) hydrophobe Stoffe enthält.

13. Stoffgemisch nach Anspruch 11 oder 12, **dadurch gekennzeichnet, dass** das Stoffgemisch (48) eine Auswahl von einem oder mehreren Stoffen der Stoffgruppen anorganische Pigmente, organische Pigmente, wasserlösliche Farbstoffe, nicht-wasserlösliche Farbstoffe, Füllstoffe, Lösungsmittel, Weichmacher, Katalysatoren, Inhibitoren, Haftmittel, Lackadditive, Dispergierhilfsmittel oder Formulierhilfsmittel umfasst.

14. Verfahren zur Herstellung einer vereisungshemmenden Schicht (36), **dadurch gekennzeichnet, dass** auf einem zu schützenden Gegenstand (34) ein Stoffgemisch (48) gemäß einem der Ansprüche 11 bis 13 aufgebracht wird.

15. Verfahren nach Anspruch 14, **dadurch gekennzeichnet, dass** das Stoffgemisch (48) auf den Gegenstand (34) aufgesprüht oder dass das Stoffgemisch (48) als Folie ausgebildet und auf den Gegenstand (34) aufgelegt, aufkaschiert oder aufgeklebt wird.

16. Verfahren nach Anspruch 14, **dadurch gekennzeichnet, dass** die Schicht (36) mechanisch, physikalisch oder chemisch strukturiert oder laserstrukturiert wird, um eine wasserabweisende Eigenschaft, in der vereisungshemmenden Schicht (36), zu verbessern.

## Claims

1. A microcapsule system (8) consisting of
- an outer capsule (10) which encloses by means of an outer envelope (14) a volume (16) containing at least one active substance (12), and
- at least one inner capsule (18), which is entirely surrounded by the outer capsule (10), said inner capsule (18) having an envelope (20) enclosing a volume (24), **characterised in that**
- the outer envelope (14) of the outer capsule (10) has pores (29),
- the volume (24) in the inner capsule (18) is a regulating substance (25) containing a mixture of water and freezing-point depressant the volume (24) of which increases as the ambient temperature progressively decreases, thus activating a release of at least a portion of the volume (16) of the active substance (12), which is an antifreeze agent, from the outer envelope (14) of the outer capsule (10).

2. The microcapsule system as claimed in claim 1, **characterised in that** the cover (20) of the inner capsule (18) is resistant against chemical attack by the active substance (12) and/or the regulating substance (25).

3. The microcapsule system as claimed in claim 1, **characterised in that** the envelope (20) of the inner capsule (18) is impermeable to the active substance (12) and/or to the regulating substance (25).

4. The microcapsule system as claimed in any of the preceding claims, **characterised in that** the envelope (20) of the inner capsule (18) is capable of expansion and resistant to tear.

5. The microcapsule system as claimed in any of the preceding claims, **characterised in that** the degree of expansibility of the outer envelope (14) of the outer capsule (10) is inferior to a degree of expansibility of the envelope (20) of the at least one inner capsule (18) in the presence of decreasing ambient temperatures.

6. The microcapsule system as claimed in claim 1, **characterised in that** the outer envelope (14) of the outer capsule (10) is broken due to the increasing internal pressure of the at least one inner capsule (18).

7. The microcapsule system as claimed in claim 1, **characterised in that** the diameter of the pores (29) of the outer envelope (14) of the outer capsule (10) augments due to an increase in pressure of the volume (16) caused by the at least one inner capsule (18).

8. The microcapsule system as claimed in claim 1, **characterised in that** the freezing-point depressant is a salt, an alcohol, a glycol and/or a spirit.

9. The microcapsule system as claimed in any of the preceding claims, **characterised in that** the active substance (12) is selected from one or more of the groups of substances consisting of glycerols, glycols, ethanols, antifreeze proteins, ice structuring proteins or **in that** the active substance (12) is an oil phase.

10. The microcapsule system as claimed in any of the preceding claims, **characterised in that** the outer capsule (10) does not release the active substance (12) into an ambient environment outside the outer envelope (14) when an ambient temperature is higher than a threshold temperature (T1) of the regulating substance (25) and **in that** the active substance (12) is released into the ambient environment (28) from the outer envelope (14) of the outer capsule (10) when the ambient temperature, has fallen below the threshold temperature (T1) of the regulating substance (25).

11. A substance mixture (48) comprising at least one binder (50), **characterised in that** the substance mixture (48) comprises a plurality of a microcapsule system (8) as claimed in any one of claims 1 to 10.

12. The substance mixture as claimed in claim 11, **characterised in that** the binder (50) comprises hydrophobic substances.

13. The substance mixture as claimed in claim 11 or 12, **characterised in that** the substance mixture (48) includes one or several substances selected from the groups of substances consisting of inorganic pigments, organic pigments, watersoluble colourants, water-insoluble colourants, fillers, solvents, plasticisers, catalysts, inhibitors, adhesive agents, coating additives, dispersion aids or formulation aids.

14. A method of fabricating an ice-inhibiting layer (36), **characterised in that** a substance mixture (48) in accordance with any one of claims 11 to 13 is applied onto an object (34) that is to be protected.

15. The method as claimed in claim 14, **characterised in that** the substance mixture (48) is sprayed onto the object (34) or **in that** the substance mixture (48) is realised as a film and is placed, laminated or pasted onto the object (34).

16. The method as claimed in claim 14, **characterised in that** the layer (36) is mechanically, physically or chemically structured or laser-structured so as to improve water repellency in the ice-inhibiting layer (36).

## Revendications

1. Système de microcapsules (8) comprenant
- une capsule extérieure (10) qui renferme, grâce à une enveloppe extérieure (14), un volume (16) contenant au moins une substance active (12), et
- au moins une capsule intérieure (18) qui est entièrement entourée par la capsule extérieure (10), la capsule intérieure (18) présentant une enveloppe (20) qui renferme un volume (24), **caractérisé en ce que**
- l'enveloppe extérieure (14) de la capsule extérieure (10) présente des pores (29),
- le volume (24) renfermé dans la capsule intérieure (18) est une substance régulatrice (25) qui contient un mélange d'eau et d'agent d'abaissement du point de congélation dont le volume (24) augmente au fur et à mesure que la température ambiante baisse et déclenche une libération au moins d'une partie du volume (16) de la substance active (12), qui est une substance antigel, hors de l'enveloppe extérieure (14) de la capsule extérieure (10).

2. Système de microcapsules selon la revendication 1, **caractérisé en ce que** l'enveloppe (20) de la capsule intérieure (18) ne peut pas être chimiquement attaquée par la substance active (12) et/ou la substance régulatrice (25).

3. Système de microcapsules selon la revendication 1, **caractérisé en ce que** l'enveloppe (20) de la capsule intérieure (18) est imperméable à la substance active (12) et/ou à la substance régulatrice (25).

4. Système de microcapsules selon l'une quelconque des revendications précédentes, **caractérisé en ce que** l'enveloppe (20) de la capsule intérieure (18) est extensible et résiste à la déchirure.

5. Système de microcapsules selon l'une quelconque des revendications précédentes, **caractérisé en ce que** l'extensibilité de l'enveloppe extérieure (14) de la capsule extérieure (10) est inférieure à une extensibilité de l'enveloppe (20) de ladite au moins une capsule intérieure (18) lorsque la température ambiante baisse.

6. Système de microcapsules selon la revendication 1, **caractérisé en ce que** l'enveloppe extérieure (14) de la capsule extérieure (10) se brise en raison de la pression intérieure qui augmente dans ladite au moins une capsule intérieure (18).

7. Système de microcapsules selon la revendication 1, **caractérisé en ce que** le diamètre des pores (29) de l'enveloppe extérieure (14) de la capsule extérieure (10) augmente lorsque la pression du volume (16) s'élève à cause de ladite au moins une capsule intérieure (18).

8. Système de microcapsules selon la revendication 1, **caractérisé en ce que** l'agent d'abaissement du point de congélation est un sel, un alcool, un glycol, et/ou un esprit.

9. Système de microcapsules selon l'une quelconque des revendications précédentes, **caractérisé en ce que** la substance active (12) est sélectionnée parmi l'un ou plusieurs des groupes de substances suivants: glycérines, glycols, éthanols, protéines antigel, protéines restructurantes de la glace ou en ce que la substance active (12) est une phase huileuse.

10. Système de microcapsules selon l'une quelconque des revendications précédentes, **caractérisé en ce que** la capsule extérieure (10) ne libère pas, dans un environnement, la substance active (12) hors de l'enveloppe extérieure (14) lorsqu'une température ambiante est supérieure à une température seuil (T1) de la substance régulatrice (25) et **en ce que** la substance active (12) est libérée, dans l'environnement (28), hors de l'enveloppe extérieure (14) de la capsule extérieure (10) lorsque la température ambiante est descendue au-dessous de la température seuil (T1) de la substance régulatrice (25).

11. Mélange de substances (48) comprenant au moins un liant (50), **caractérisé en ce que** le mélange de substances (48) comprend une pluralité d'un système de microcapsules (8) selon l'une quelconque des revendications 1 à 10.

12. Mélange de substances selon la revendication 11, **caractérisé en ce que** le liant (50) contient des substances hydrophobes.

13. Mélange de substances selon la revendication 11 ou 12, **caractérisé en ce que** le mélange de substances (48) comprend un choix d'une ou de plusieurs substances issues des groupes de substances suivants: pigments inorganiques, pigments organiques, colorants solubles dans l'eau, colorants non solubles dans l'eau, matières de charge, solvants, plastifiants, catalyseurs, inhibiteurs, adhésifs, additifs de peinture, agents de dispersion ou agents de formulation.

14. Procédé permettant de réaliser une couche antigivrage (36), **caractérisé en ce qu'**un mélange de substances (48) selon l'une quelconque des revendications 11 à 13 est appliqué sur un objet (34) à protéger.

15. Procédé selon la revendication 14, **caractérisé en ce que** le mélange de substances (48) est vaporisé sur l'objet (34) ou **en ce que** le mélange de substances (48) est réalisé sous forme de feuille et est posé, laminé ou collé sur l'objet (34).

16. Procédé selon la revendication 14, **caractérisé en ce que** la couche (36) est structurée de manière mécanique, physique ou chimique ou structurée au laser afin d'améliorer une propriété hydrofuge dans la couche antigivrage (36).
